# EUROPEAN PATENT SPECIFICATION

(11) **EP 2 304 007 B1**
(45) Date of publication and mention of the grant of the patent: **15.08.2012**
(21) Application number: 09779745.0
(22) Date of filing: 15.06.2009
(51) Int. Cl.: C11B 13/00, C11B 13/02, C11C 1/02

(54) **PROCESS FOR PRODUCING TALL OIL AND USE OF BRINE DEACTIVATION IN THE PRODUCTION OF TALL OIL**
VERFAHREN ZUR HERSTELLUNG VON TALLÖL UND VERWENDUNG VON LAUGENDEAKTIVIERUNG BEI DER HERSTELLUNG VON TALLÖL
PROCÉDÉ DE PRODUCTION D'HUILE DE TALL ET UTILISATION D'UNE RÉACTION DE DÉSACTIVATION DE SAUMURE DANS LA PRODUCTION D'HUILE DE TALL

(30) Priority: 17.06.2008 FI 20085595
(43) Date of publication of application: 06.04.2011
(73) Proprietor: Linde AG, 65189 Wiesbaden (DE)
(72) Inventor: VUORIKARI, Olavi, FI-06650 Hamari (FI); LEINO, Hannu, FI-02320 Espoo (FI); KJELLBERG, Nils, S-17552 Järfälla (SE)
(86) International application number: PCT/EP2009/057340
(87) International publication number: WO 2010/136079

(56) References cited:
- EP-A1- 1 302 529
- EP-A1- 1 442 107
- WO-A1-95/23837
- WO-A1-96/34932
- WO-A1-03/025106
- US-A- 2 772 965
- US-A- 3 901 869

## Description

### FIELD OF THE INVENTION

The present invention relates to a process for producing of tall oil from soap oil and to the use of a bicarbonate brine deactivation reaction in the production of tall oil. The aim of the invention is to provide improvements in the production of tall oil. According to the invention, soap oil, which has been produced by neutralization of tall oil soap with carbon dioxide, is acidulated by reacting said soap oil with a strong acid in order to free the tall oil, and the freed tall oil is recovered. The improvement according the invention relates specifically to the deactivation of bicarbonate brine remaining in admixture with said soap oil even after a phase separation of brine has been performed. The deactivation reaction releases carbon dioxide gas, which is then removed.

### BACKGROUND OF THE INVENTION

Tall oil soap is produced as a byproduct in the digestion of wood chips in the sulfate pulping process. The spent digestion liquor or "black liquor" contains sodium soaps of resin acids and fatty acids (tall oil) as well as some neutral or unsaponifiable components.

Crude tall oil soap is skimmed off the top of concentrated black liquor. The tall oil soap generally has a pH between 10 and 13, usually close to 12 and it still contains about 40 to 50 % black liquor. The separated tall oil soap is traditionally acidulated with sulfuric acid to a pH of about 2 to 4 at which pH the sodium soaps of the tall oil fatty acids are released and can be separated from the aqueous brine-acid phase. The free tall oil can be used to provide a number of different chemicals for various industrial applications.

The sulfuric acid, which is traditionally used in the acidulation, increases the sulfur input and distorts the sulfur balance in a pulp mill. In order to reduce the sulfur input in the tall oil soap acidulation, it is known in the art that part of the sulfuric acid can be replaced with other acids or acidically reacting compounds. There are a number of patent documents relating to such processes.

Thus, for instance US patent 3,901,869 (Westvaco) describes the neutralization of tall oil soap with carbon dioxide and water to a pH of 7 to 8. The resulting soap oil phase is separated from the aqueous bicarbonate brine phase and is then further acidulated with sulfuric acid to free the tall oil. Prior to the acidulation, the soap oil layer is stripped from excess bicarbonate brine by washing with water or by steam stripping to prevent entrained brine from reacting with the sulfuric acid and liberating carbon dioxide and thus causing foaming in the acidulation.

US Patent 4,495,095 (Union Camp) discloses acidulation of tall oil soap with carbon dioxide under a pressure at which the carbon dioxide is in a supercritical state.

US Patent 5,286,845 (Union Camp) teaches neutralization of tall oil soap with carbon dioxide under pressure and separation of the resulting soap oil and bicarbonate brine also under pressure. Substantial savings in the use of sulfuric acid for the final acidulation are provided.

WO 95/23837 (Metsäbotnia) discloses a carbon dioxide neutralization of tall oil soap wherein an extra neutralization with sulfuric acid is performed before the separation of the bicarbonate brine and the neutralized soap oil. The final acidulation to free the tall oil is performed with sulfuric acid.

WO 94/11571 (LT-Dynamics Oy) discloses a process for the neutralization of tall oil soap with sodium bisulfite before a final acidulation with sulfuric acid. The neutralization is performed in one or several steps at a temperature of 90 to 150 °C. The pH of the separated soap oil is 6 to 6.5 or lower. The final acidulation of the resulting soap oil is performed by heating with sulfuric acid in a standard manner, typically at 80 °C, to obtain tall oil.

WO 96/34932 (Oy Polargas Ab) discloses a process for improving the water separation in a carbon dioxide neutralization of tall oil soap. After the neutralization but before the cooking with sulfuric acid, the pH is adjusted with an acidically reacting compound such as bisulfite.

WO 98/29524 (AGA AB) discloses cleaning of crude tall oil soap with carbon dioxide to remove lignin impurities prior to neutralization with carbon dioxide and/or sulfuric acid.

WO 99/29813 (Oy Polargas Ab) discloses a process wherein tall oil soap is neutralized with carbon dioxide and the resulting soap oil is heated in an intermediate step to 60 to 100 °C in order to release gases prior to adding sulfuric acid to the soap oil for cooking the soap oil in a standard manner to free tall oil.

EP 1 870 445 (Linde AG) discloses a process for improving the acidulation of soap oil which has been provided by neutralization with carbon dioxide. The acidulation reaction between soap oil and sulfuric acid is improved by raising the temperature above 100 °C.

The above mentioned prior art discloses the use of carbon dioxide, bisulfite or other acidically reacting compound(s) in the pre-treatment of tall oil soap to produce an intermediate neutralized product, i.e. soap oil having a pH of about 6 to 8.5, typically about 7 to 8. This pretreatment reduces the amount of sulfuric acid required for the final acidulation step in the production of tall oil by as much as 35-40% or more. Thus, this pre-treatment or neutralization step is highly advantageous in reducing the sulfur load in a pulp mill.

The prior art so far, has concentrated very much on improving the neutralization step, while the final cooking, i.e. the acidulation with sulfuric acid or other strong acid has been mostly performed according to standard practices well known from traditional acidulations, wherein sulfuric acid alone is used in one step to free the tall oil from the skimmed tall oil soap.

The prior art describes a problem in the final acidulation of the soap oil in that it is not possible to remove 100% of the bicarbonate brine from the soap oil phase. When a strong acid such as sulfuric acid is added to the soap oil phase, the acid reacts not only with the soap oil fatty acids but it also reacts with the entrained bicarbonate remaining in admixture with the soap oil. The acidic reaction decomposes the bicarbonate and releases carbon dioxide gas, which results in extensive foaming.

Attempts to solve the problem have been made. Thus, US 3,901,869 mentioned above proposes washing or steam stripping the soap oil layer prior to sulfuric acid addition. However, the washing of the soap oil produces a lot of contaminated water and dilutes the soap oil without removing the brine adequately. WO 99/29813, also mentioned above, introduces an intermediate heating of the soap oil brine admixture prior to sulfuric acid addition. The intermediate heating of the soap oil and removal of released gas reduces the amount of gas released in the acidulation but there still remains brine from which gas is released in the acidulation step. WO 03/031545 (Linde AG) improves the separation by adding a density increasing compound to the aqueous brine phase.

In order to provide a reaction between the fatty acid soaps and the sulfuric acid, the soap has to be heated to a temperature of 80 °C or more. When sulfuric acid is added to a hot (80-100 °C) soap oil and brine admixture, the sulfuric acid reacts very quickly with the brine and releases carbon dioxide gas almost in an explosive manner. The resulting extensive foaming is very difficult to handle in an industrial environment and the foaming also impairs the contact between acidulating acid and soap resulting in a poor conversion to tall oil. Moreover, gas bubbles from the foaming remain in the liquor phase going down in the separation vessel and disturb the settlement of the heavier lignin and brine phases from the lighter tall oil phase. This causes a kind of a flotation problem that impairs the separation.

There thus exists a need to improve the acidulation of soap oil and especially to reduce the foaming of carbon dioxide in the acidulation reaction. There is also a need to improve the quality and the yield of the tall oil recovered in the acidulation of soap oil. There is also a need for improving the control of the acidulation process in a sulfate pulp mill and to improve the tall oil recovery cycle. The over-all need of a mill is typically to reduce the sulfur load in the tall oil recovery cycle by substituting a part of the sulfuric acid with other acids without reducing the speed of the process or the yield and/or quality of the product.

The present invention sets out to solve these and other problems of the prior art and to provide a process for the recovery of valuable tall oil from soap oil with controlled release of gas.

### SUMMARY OF THE INVENTION

In connection with the present invention, it was surprisingly found that the problems with gas evolution and foaming in the acidulation of soap oil could be overcome by adding the strong acid needed to free the tall oil in at least two separate portions and by providing removal of the gas released by the first strong acid portion before the second portion is added.

The process according to the invention for producing tall oil comprising the steps wherein
a) tall oil soap is neutralized with a neutralizing compound selected from carbon dioxide and aqueous solutions thereof to provide a mixture of soap oil and bicarbonate brine,
b) bicarbonate brine is physically separated from said mixture,
c) rest brine remaining in admixture with said soap oil after said separation is deactivated by reaction with a first portion of a strong acid,
d) gas released in the deactivation reaction is removed, where after
e) the gas-depleted soap oil is acidulated with a second portion of strong acid, and d) tall oil is recovered.

The said first portion of strong acid provides chemical deactivation of the rest brine. The deactivation decomposes the bicarbonate (NaHCO₃), and carbon dioxide gas (CO₂) released in the chemical reaction is removed. In an embodiment of the invention, the deactivation reaction is performed under conditions, wherein primarily the brine and substantially no soap oil, reacts with the strong acid.

According to the invention, the deactivation is performed for deactivating the brine without acidulating the fatty acid soaps of the soap oil. Thus, the deactivation provides a selective chemical reaction which removes the cause of the previously encountered gas evolution and foaming problem. The removal of the gas is done under controlled conditions. After the deactivation and gas removal the final acidulation is easy and simple to perform.

In an embodiment of the invention, the first portion of strong acid in the deactivation step is added to a brine-soap oil admixture, which has a temperature below 75 °C, preferably below 60 °C, and most preferably between 40 and 55 °C. The relatively low temperature reaction medium will direct the chemical reaction towards a reaction between acid and bicarbonate avoiding reaction with the les readily reacting soap components.

In one embodiment of the invention, the first portion of strong acid used in said deactivation reaction is selected to be stoichiometrically equivalent to the amount of rest brine which remains in admixture with the soap oil and which is to be deactivated.

The amount of strong acid needed for the deactivation may also be controlled by monitoring the progress on the chemical reaction. The deactivation reaction is continued until the gas release has stopped. The addition of strong acid may also be monitored by pH.

The present invention also relates to the use of a brine deactivation reaction in a process for providing tall oil from soap oil. The use comprises reacting rest bicarbonate brine remaining in admixture with said soap oil with a first portion of strong acid, removing gas released in said deactivation reaction, and acidulating the gas-depleted soap oil with a second portion of strong acid.

### DETAILED DESCRIPTION OF THE INVENTION.

In the process according to the invention soap oil is first provided from tall oil soap. Soap oil may be produced by any of a number of known procedures for producing soap oil, e.g. as described in the above-mentioned prior art documents. The soap oil of the present invention is produced by carbon dioxide neutralization. The brine is bicarbonate brine and carbon dioxide is released in the deactivation reaction. If sulfur dioxide is used, the brine comprises bisulfite brine and the gas released comprises SO₂.

Crude tall oil soap in the black liquor typically has a pH of about 10-13. The tall oil fatty acids and resins are in the sodium salt form i.e. as soaps. The neutralization with an acidically reacting compound, such as carbon dioxide and water, frees.fatty acids into the free acid form. The neutralization proceeds according to the following reaction:

RCOONa + CO₂ + H₂O → RCOOH + NaHCO₃

Thus, the reaction proceeds with carbon dioxide and water by forming sodium bicarbonate brine and soap oil. When the pH reaches a value between about pH 8.5 and 6, typically between pH 8 and 7, the soap oil/bicarbonate brine emulsion "breaks" and the lighter oil phase rises to the top leaving the aqueous bicarbonate brine at the bottom. It is this breaking of the emulsion, which makes it possible to separate the bicarbonate brine from the neutralized soap oil. The pH of the soap oil when neutralized with sulfur dioxide or sodium bisulfite is typically pH 8-6.

After the emulsion has "broken", the oil phase (soap oil) is separated from the aqueous bicarbonate brine. As mentioned above in connection with the prior art, numerous processes have been designed for improving the neutralization and the separation of the soap oil. The soap oil typically has a dry substance content of about 45 to 65 %, most typically less than 60 %, and a brine content of 35 to 55 %. The soap oil phase may be washed with water or cleaned by steam stripping to remove excess gas and brine. The soap oil phase may also be heated to remove entrained gas and to decompose some of the brine.

The soap oil phase with any remaining brine is then traditionally acidulated by reacting the soap oil with a strong acid to free the rest of the tall oil.

Tall oil is traditionally manufactured from tall oil soap in a reactor either in a batch type reaction or in a continuous process. A much used reactor for continuous production of tall oil from soap is a so-called hydrodynamic separation reactor or HDS reactor. In the reactor the soap is contacted with the strong acid at a temperature of 80 to 100 °C and the tall oil is freed. The final reaction takes place at pH 2 to 4. In a HDS reactor the freed tall oil separates and floats on top through a lamella system for further transportation to storage tanks. The same kind of procedures is typically used when producing tall oil from soap oil.

It is known that acidulation of tall oil soap and soap oil requires a high temperature for the reaction between the soap components and the acidulating acid to proceed satisfactorily. Therefore, traditional acidulation (also called "cooking") is performed by heating the soap or soap oil to a temperature above 80 °C and typically between 90 and 100 °C for the acidulation.

According to the present invention, the admixture of rest brine and soap oil is not heated before the first portion of acid is added in the deactivation reaction. The brine-soap oil typically has a temperature of 40 to 55 °C and the deactivation is preferably performed at this temperature, although it is possible to perform the reaction on soap oil at a lower temperature such at ambient temperature or even lower, and also at a slightly higher temperature such as at 60 °C. The brine-soap oil admixture should, however, have a temperature below 75 °C to provide the desired selective chemical reaction with the bicarbonate and to avoid any significant amount of acidulation of the tall oil soap components.

In the low temperature deactivation of the rest brine-soap oil admixture according to the invention, the faster and more vigorous bicarbonate neutralization reaction will take place first, while the soap components will remain substantially unreacted. The lower the temperature of the reaction medium, the less will there be soap acidulation during the deactivation reaction. Removal of the gas released in the deactivation reaction will continuously push the reaction equilibrium towards decomposition of the bicarbonate. Because the temperature of the reaction medium subjected to the deactivation reaction is low compared to traditional high temperature acidulations, the addition of acid will not lead to any instant production of huge amounts of gas and hence there is no problematic foaming.

The deactivation reaction is shown by the equation below:

2 NaHCO₃ + H₂SO₄ -+ Na₂SO₄ + 2 H₂O + 2 CO₂↑

As it is a reaction which negates the benefits of the carbon dioxide neutralization and which entails a vigorous evolution of gas, it is a reaction which the prior art has attempted to avoid e.g. by washing and stripping the separated soap oil, or by heating to release carbon dioxide that way.

In the present invention, the above reaction is not avoided. On the contrary, the reaction is actively utilized for improving the over-all process. According to the invention, the reaction is performed selectively under controlled conditions so at to remove the released gas without uncontrolled foaming.

The deactivation reaction is preferably performed under vacuum to facilitate removal of the released gas. The under-pressure of the vacuum need not be high. Preferably, the deactivation reaction is performed in a vessel which is connected to the odour removal system of the plant.

By avoiding heating of the soap oil before adding the first portion of strong acid and also by applying a small vacuum to the deactivation reaction vessel, the deactivation is made to proceed selectively and smoothly.

Once the rest bicarbonate brine has been deactivated to sodium sulfate and carbon dioxide, and the released carbon dioxide gas has been removed, the gas-depleted soap oil with its (inactive) sodium sulphate brine may be acidulated without problems. The acidulation reaction is shown by the equation below:

2 RCOONa + H₂SO₄ ↔ 2 RCOOH + Na₂SO₄

The strong acid used for deactivation and/or acidulation is typically selected from strong mineral acids such as sulfuric acid, sulphurous acid, hydrochloric acid, nitric acid, phosphoric acid, boric acid and the like. Waste acids from other industrial processes, such as ClO₂ generator waste acid, or acidic sulfate brine from the tall oil acidulation step may also be used. Both of the said waste acids comprise spent sulfuric acid, which can be put to renewed use in the deactivation step. Combinations of different acids may also be used. The strong acid used in the deactivation and acidulation steps may be the same or they may be different strong acids.

The strong acid in the deactivation step is preferably selected from sulfuric acid, sulfurous acid, ClO₂ generator waste acid and tall oil acidulation brine. The strong acid in the acidulation step is preferably sulfuric acid. Typically sulfuric acid is used in both the deactivation and the acidulation steps. The sulfuric acid is preferably concentrated sulfuric acid, as this improves the separation and reduces the amount of water that has to be evaporated from the brine. Concentrated sulfuric acid is typically about 96% acid. The sulfuric acid may, however, also be diluted with water. A dilution to a concentration as low as 25 to 50% reduces the risk of causing "burning" of the tall oil components.

The amount of strong acid needed for the deactivation step may be calculated based on the amount of rest brine remaining in the soap oil after the phase separation stage. The strong acid may also be added for as long as there is gas evolution. When no more gas evolves, the brine is considered sufficiently deactivated.

The strong acid may also be added according to pH. The pH of the soap oil phase after separation is typically between pH 7 and 8 and the bicarbonate brine deactivation will not cause any huge drop in pH even though quite a huge amount of acid may be added. This is because the strong acid drives off carbon dioxide and this counters the pH decreasing effect. When the pH starts dropping, it is an indication that the deactivation is complete or sufficient. Typically, the deactivation reaction reduces the pH no more than 1 pH unit, preferably no more than 0.5 pH units. The deactivation reaction typically does not reduce the pH to any less than pH 6 and preferably not to any less than pH 6.5

It is not necessary the deactivate 100% of the rest brine in the deactivation phase. Any brine remaining even after the deactivation will be consumed and deactivated in the subsequent acidulation step. The small amount of gas released by such late reaction is not necessarily detrimental to the over-all process. According to the invention at least 50%, preferably more than 75% and most preferably more than 90% of the rest bicarbonate brine is deactivated in the deactivation step.

It is not either necessary to keep 100% of the soap components of the soap oil from reacting in the deactivation reaction. However, any acid consumed in the brine deactivation step for the acidulation of soap components, is contrary to the object of the invention. According to the invention less than 50%, preferably less than 25% and most preferably less than 10% of the soap components are acidulated in the deactivation step.

In a preferred embodiment of the invention more than 90% of the brine and less than 10% of the soap components react with the deactivating acid.

Depending on the amount of water and sulfate brine remaining in the soap oil phase after the deactivation, it may be desirable to perform a second phase separation step after the gas removal in order to increase the concentration of the soap oil. The phase separation also removes other impurities which collect in the aqueous phase and thus improves the purity of the tall oil obtained after acidulation. The dry content of the soap oil after the second phase separation should be above 40% and preferably above 50%. In one embodiment of the invention, the phase separation increases the dry content to over 60%. Once the rest brine has been deactivated and the gas has been removed, the remaining gas-depleted soap oil (with more or less of its sulphate brine) can be acidulated in a traditional manner. This comprises heating the gas-depleted soap oil to a temperature above 80 °C, preferably above 90 °C and reducing the pH with a second portion of strong acid in one or more steps to a value between pH 2 and 4.

The soaps in a traditional tall oil soap or soap oil are typically sodium soaps. The sodium soaps may, if desired, be converted into other soaps such as alkaline earth metal salts prior to the deactivation or acidulation reaction. Converting the sodium soap into another soap reduces the sodium content of the reaction mixture and this has a beneficial influence on the sodium balance of the mill as well as on the properties of the product.

In the present specification and claims, the term "tall oil soap" refers to a mixture of saponified fatty acid glycerides/resin acids and black liquor which has been recovered from black liquor in a Kraft pulping process. The pH of the alkaline liquor is typically 10-13 and the soaps are typically sodium salts of said acids. Crude tall oil soap also contains lignin and other impurities deriving from the digestion of the wood.

The term "neutralization" as used herein refers to a pre-acidification of the alkaline tall oil soap to a substantially neutral pH (pH 6-8.5). The preferred neutralization according to the invention is performed with gaseous carbon dioxide or a solution of carbon dioxide in water.

The term "soap oil" as used herein refers to an oil phase of neutralized tall oil soap. The soap oil is the oil phase obtained after the neutralization and after separation of the aqueous brine phase. The term "soap oil" typically also includes the rest brine even when this is not expressly stated. The phase separation may be facilitated by the use of pressure and/or by the addition of various phase separation aids to the mixture. The soap oil typically has a pH between 6 and 8.5.

The term "rest brine" as used herein refers to the bicarbonate brine remaining in admixture with the soap oil even after the phase separation step.

The term "deactivation" as used herein refers to a chemical decomposition of the rest brine. The entrained rest brine is allowed to react with a strong acid to chemically release carbon dioxide. The deactivation is an acid treatment which is separate from and not aimed at acidulation of the soap components of the soap oil. The pH of the soap oil after the deactivation step is between pH 6 and 8, typically between 6.5 and 7.5.

The term "gas-depleted soap oil" as used herein refers to the soap oil product, which is obtained when the rest brine-soap oil admixture has been treated with a strong acid to deactivate the rest brine and to release gas and from which gas has consequently been removed.

The term "acidulating" or "cooking" as used herein in connection with the soap oil refers to the acidification of the substantially neutral soap oil to a pH of about 2 to 4, at which pH the tall oil is freed and separates from the aqueous phase. As the term cooking indicates, the acidulation reaction is performed at a high temperature such as at 80 to 100 °C, typically at 90 to 100 °C.

The process according to the invention is especially well suited for the production of tall oil in a continuous process. However, the process may also be used in a batch operated process.

The following examples serve to illustrate the invention and are not intended to limit the scope thereof.

### Example 1

In a tall oil plant, crude tall oil soap from a Kraft pulping process is fed into a neutralisation reactor and mixed therein with a solution of carbon dioxide in water. Carbon dioxide water is added until the pH is about 7.7, at which the mixture is ready for phase separation.

The mixture is allowed to separate into a bicarbonate brine layer on the bottom and a soap oil layer at the top. The soap oil is pumped from the top of the reactor via a long pipe to a soap oil storage tank. The temperature of the soap oil layer is about 50 °C. The bicarbonate brine from the bottom of the reactor is recycled to the recovery system of the plant.

The amount of bicarbonate brine left in the soap oil layer is measured. At the upstream end of the soap oil pipe, sulfuric acid is added into the soap oil in an amount roughly corresponding to the stoichiometric amount of brine. Mixing in the pipe is provided by static mixers.

The pipe is connected to the odour tank system of the tall oil plant and is consequently at a slight under-pressure of about 1.7 kPa. In the pipe the rest brine in the soap oil phase is deactivated by the sulfuric acid, as a consequence of which carbon dioxide gas is released. The gas is removed into the odour system. There is hardly any foaming. The pH of the soap oil as it reaches the soap oil storage tank is about 7.3.

The gas-depleted soap oil is pumped from the top of the storage tank to a hydrodynamic separation reactor (HDS) and is heated to 90 °C. Sulfate brine collecting at the bottom of the storage tank is withdrawn and sent to the recovery system. In the HDS reactor the hot soap oil is contacted with concentrated sulfuric acid. There is no disturbing foaming and the reaction proceeds smoothly until the pH drops to about 3 and the tall oil is freed. The freed tall oil separates and floats on top through a lamella system for further transportation to storage tanks. The separation is fast and clear and the yield of tall oil is high. The produced tall oil is of good quality.

The acidic sulfate brine at the bottom of the HDS and sent to the recovery process. Alternatively, the acidic brine having a pH of about 2-3 can be used as acid for the next deactivation process.

### Example 2

The present invention was tested in laboratory equipment on a carbon dioxide neutralized soap oil sample from a pulp mill. The dry content of the soap oil was 65 %. About 100 g of soap oil was measured into the laboratory equipment at each test.

The soap oil was acidulated with sulfuric acid at various temperatures and with and without a deactivation stage. The mixture was mixed at 270 rpm during deactivation and 500 rpm during acidulation. The results are indicated in Table 1 below.

**Table 1.**

| | Test 1 | Test 2 | Test 3 |
|---|---|---|---|
| Deactivation, H₂SO₄ (ml) | - | 1.6 | 2.0 |
| Deactivation temp.* (°C) | - | 46 | 48 |
| Deactivation acid addition time (s) | - | 15 | 15 |
| Deactivation max. temp. (°C) | - | 54 | 63 |
| Deactivation reaction time (min) | - | 10 | 10 |
| Acidulation, H₂SO₄ (ml) | 4.8 | 1.6 | 1.2 |
| Acidulation temp.* (°C) | 85 | 89 | 91 |
| Acidulation acid addition time (s) | 60 | 15 | 10 |
| Acidulation, max. temp. (°C) | 100 | 98 | 100 |
| Acidulation reaction time (min) | 1 | 0.5 | -0.5 |
| Oil separation after 3 min. acidulation (ml) | 65 | 70 | 60 |
| Approx. oil yield (%) | 88-95 | 95 | 88 |
| Deactivation acid kg/ton tall oil | - | 48 | 65 |
| Acidulation acid kg/ton tall oil | 143 | 48 | 39 |
| Total acid kg/ton tall oil | 143 | 95 | 103 |

| | | | |
|---|---|---|---|
| * the temperature of the soap oil mixture when the acid addition started. | | | |

There was significantly less foaming in the acidulation when the soap oil had been deactivated before the acidulation. The deactivated material was easy to handle and the yield of tall oil was not reduced.

Thus, the brine deactivation reaction with a strong acid at a low reaction temperature in accordance with the invention operates to satisfaction and provides a good yield of tall oil.

## Claims

1. A process for producing tall oil comprising the steps wherein
a) tall oil soap is neutralized with a neutralizing compound selected from carbon dioxide and aqueous solutions thereof to provide a mixture of soap oil and bicarbonate brine,
b) bicarbonate brine is physically separated from said mixture,
c) rest brine remaining in admixture with said soap oil after said separation is deactivated by reaction with a first portion of strong acid,
d) gas released in the deactivation reaction is removed, where after
e) the gas-depleted soap oil is acidulated with a second portion of strong acid, and d) tall oil is recovered.

2. The process according to claim 1, wherein said soap oil in step a) has been produced by neutralization with carbon dioxide to a pH between 6 and 8.5, preferably between 7 and 8.

3. The process according to any one of the preceding claims, wherein said strong acid is selected from sulfuric acid, sulfurous acid, hydrochloric acid, nitric acid, phosphoric acid, boric acid, ClO₂ generator waste acid, tall oil acidulation brine and combinations thereof.

4. The process according to claim 3, wherein the strong acid in deactivation step c) is selected from sulfuric acid, sulfurous acid, ClO₂ generator waste acid and tall oil acidulation brine and the strong acid in the acidulation step e) is sulfuric acid.

5. The process according to claim 4, wherein said strong acid in step c) and/or e) is concentrated sulfuric acid.

6. The process according to any one of the preceding claims, wherein said deactivation in step c) is performed by reacting the rest brine in admixture with said soap oil with said first portion of said strong acid under conditions, wherein primarily the brine and substantially no soap components, reacts with said acid.

7. The process according to claim 6, wherein said first portion of strong acid in said deactivation step c) is added to said rest brine-soap oil admixture having a temperature below 75 °C, preferably below 60 °C, and most preferably between 40 and 55 °C

8. The process according to any one of the preceding claims, wherein said first portion of strong acid used in said deactivation reaction of step c) is selected to be stoichiometrically equivalent to the amount of rest brine which is to be deactivated.

9. The process according to any one of the preceding claims 1 to 7, wherein said deactivation reaction in step c) is continued until the gas release has stopped.

10. The process according to any one of the preceding claims, wherein said deactivation reaction reduces the pH no more than 1 pH unit, preferably no more than 0.5 pH units.

11. The process according to any one of the preceding claims, wherein said deactivation reaction reduces the pH to no less than pH 6, preferably to no less than pH 6.5

12. The process according to any one of the preceding claims, wherein a second phase separation step is performed after said gas removal in step d) to increase the concentration of said soap oil.

13. The process according to any one of the preceding claims, wherein said acidulation in step e) comprises heating the gas-depleted soap oil to a temperature above 80 °C, preferably above 90 °C and reducing the pH with said second portion of strong acid in one or more steps to a value between pH 2 and 4.

14. The process according to any one of the preceding claims, wherein said deactivation reaction is performed under vacuum to facilitate removal of the released gas.

15. Use of a brine deactivation reaction in a process for providing tall oil from soap oil, which comprises reacting rest bicarbonate brine remaining in admixture with said soap oil with a first portion of strong acid, removing gas released in said deactivation reaction, and acidulating the gas-depleted soap oil with a second portion of strong acid.

## Patentansprüche

1. Verfahren zum Herstellen von Tallöl, umfassend die Schritte wobei
a) Tallölseife mit einer neutralisierenden Verbindung, ausgewählt aus Kohlendioxid und wässrigen Lösungen davon, neutralisiert wird, um ein Gemisch von Seifenöl und Bicarbonatlauge zu ergeben,
b) die Bicarbonatlauge physikalisch von dem Gemisch abgetrennt wird,
c) Restlauge, die nach der Abtrennung im Gemisch mit dem Seifenöl verbleibt, durch Umsetzung mit einem ersten Teil einer starken Säure deaktiviert wird,
d) bei der Deaktivierungsreaktion freigesetztes Gas entfernt wird, wonach
e) das entgaste Seifenöl mit einem zweiten Teil einer starken Säure gesäuert wird, und
f) Tallöl gewonnen wird.

2. Verfahren gemäß Anspruch 1, wobei das Seifenöl bei Schritt a) durch Neutralisieren mit Kohlendioxid auf einen pH-Wert zwischen 6 und 8,5, vorzugsweise zwischen 7 und 8, hergestellt worden ist.

3. Verfahren gemäß einem der vorstehenden Ansprüche, wobei die starke Säure ausgewählt ist aus Schwefelsäure, schwefliger Säure, Salzsäure, Salpetersäure, Phosphorsäure, Borsäure, ClO₂-Generator-Abfallsäure, Tallöl-Säuerungslauge und Kombinationen davon.

4. Verfahren gemäß Anspruch 3, wobei die starke Säure bei dem Deaktivierungsschritt c) ausgewählt ist aus Schwefelsäure, schwefliger Säure, ClO₂-Generator-Abfallsäure, Tallöl-Säuerungslauge, und die starke Säure bei dem Säuerungsschritt e) Schwefelsäure ist.

5. Verfahren gemäß Anspruch 4, wobei die starke Säure bei Schritt c) und/oder e) konzentrierte Schwefelsäure ist.

6. Verfahren gemäß einem der vorstehenden Ansprüche, wobei die Deaktivierung bei Schritt c) durch Umsetzen der Restlauge im Gemisch mit dem Seifenöl mit dem ersten Teil der starken Säure unter Bedingungen durchgeführt wird, bei denen hauptsächlich die Lauge und im Wesentlichen keine Seifenkomponenten mit der Säure reagieren.

7. Verfahren gemäß Anspruch 6, wobei der erste Teil der starken Säure bei dem Deaktivierungsschritt c) zu dem Restlauge-Seifenöl-Gemisch, das eine Temperatur von unter 75 °C aufweist, vorzugsweise unter 60 °C, höchst bevorzugt zwischen 40 und 55 °C, zugegeben wird.

8. Verfahren gemäß einem der vorstehenden Ansprüche, wobei der bei der Deaktivierungsreaktion von Schritt c) verwendete erste Teil der starken Säure so gewählt wird, dass er mit der zu deaktivierenden Menge an Restlauge stöchiometrisch äquivalent ist.

9. Verfahren gemäß einem der vorstehenden Ansprüche 1 bis 7, wobei die Deaktivierungsreaktion bei Schritt c) fortgeführt wird, bis die Gasfreisetzung beendet ist.

10. Verfahren gemäß einem der vorstehenden Ansprüche, wobei die Deaktivierungsreaktion den pH-Wert um nicht mehr als 1 pH-Einheit verringert, vorzugsweise um nicht mehr als 0,5 pH-Einheiten.

11. Verfahren gemäß einem der vorstehenden Ansprüche, wobei die Deaktivierungsreaktion den pH-Wert auf nicht weniger als pH 6 verringert, vorzugsweise auf nicht weniger als pH 6,5.

12. Verfahren gemäß einem der vorstehenden Ansprüche, wobei nach dem Entfernen von Gas bei Schritt d) ein zweiter Phasentrennungsschritt durchgeführt wird, um die Konzentration des Seifenöls zu erhöhen.

13. Verfahren gemäß einem der vorstehenden Ansprüche, wobei die Säuerung bei Schritt e) das Erwärmen des entgasten Seifenöls auf eine Temperatur über 80 °C, vorzugsweise über 90 °C, und Verringern des pH-Werts mittels des zweiten Teils einer starken Säure in einem oder mehreren Schritten auf einen Wert zwischen pH 2 und 4 umfasst.

14. Verfahren gemäß einem der vorstehenden Ansprüche, wobei die Deaktivierungsreaktion unter Unterdruck durchgeführt wird, um das Entfernen des freigesetzten Gases zu erleichtern.

15. Verwendung einer Lauge-Deaktivierungsreaktion bei einem Verfahren zum Bereitstellen von Tallöl aus Seifenöl, umfassend das Umsetzen von Rest-Bicarbonatlauge, die im Gemisch mit dem Seifenöl verbleibt, mit einem ersten Teil einer starken Säure, Entfernen von Gas, das bei der Deaktivierungsreaktion freigesetzt wird, und Säuern des entgasten Seifenöls mit einem zweiten Teil einer starken Säure.

## Revendications

1. Procédé de production de tallol comprenant les étapes dans lesquelles
a) du savon de tallol est neutralisé avec un composé neutralisant choisi parmi le dioxyde de carbone et ses solutions aqueuses pour donner un mélange d'huile de savon et de saumure de bicarbonate,
b) la saumure de bicarbonate est séparée physiquement dudit mélange,
c) le reste de saumure demeurant en mélange avec ladite huile de savon après ladite séparation est désactivé par réaction avec une première portion d'acide fort,
d) le gaz dégagé dans la réaction de désactivation est éliminé, après quoi
e) l'huile de savon appauvrie en gaz est acidulée avec une deuxième portion d'acide fort, et
f) le tallol est récupéré.

2. Procédé selon la revendication 1, dans lequel ladite huile de savon dans l'étape a) a été produite par neutralisation avec du dioxyde de carbone à un pH entre 6 et 8,5, de préférence entre 7 et 8.

3. Procédé selon l'une quelconque des revendications précédentes, dans lequel ledit acide fort est choisi parmi l'acide sulfurique, l'acide sulfureux, l'acide chlorhydrique, l'acide nitrique, l'acide phosphorique, l'acide borique, l'acide résiduel de la production de ClO₂, la saumure d'acidulation de tallol et leurs combinaisons.

4. Procédé selon la revendication 3, dans lequel l'acide fort dans l'étape de désactivation c) est choisi parmi l'acide sulfurique, l'acide sulfureux, l'acide résiduel de la production de ClO₂ et la saumure d'acidulation de tallol et l'acide fort dans l'étape d'acidulation e) est l'acide sulfurique.

5. Procédé selon la revendication 4, dans lequel ledit acide fort dans l'étape c) et/ou e) est de l'acide sulfurique concentré.

6. Procédé selon l'une quelconque des revendications précédentes, dans lequel ladite désactivation dans l'étape c) est réalisée par réaction du reste de saumure en mélange avec ladite huile de savon avec ladite première portion dudit acide fort, dans des conditions dans lesquelles la saumure principalement, et pratiquement aucun constituant de savon, réagit avec ledit acide.

7. Procédé selon la revendication 6, dans lequel ladite première portion d'acide fort dans ladite étape de désactivation c) est ajoutée audit reste de mélange saumure-huile de savon ayant une température inférieure à 75°C, de préférence inférieure à 60°C, et tout particulièrement entre 40 et 55°C.

8. Procédé selon l'une quelconque des revendications précédentes, dans lequel ladite première portion d'acide fort utilisée dans ladite réaction de désactivation de l'étape c) est choisie de façon à être équivalente quant à la stoechiométrie à la quantité du reste de saumure qui est à désactiver.

9. Procédé selon l'une quelconque des revendications précédentes 1 à 7, dans lequel ladite réaction de désactivation dans l'étape c) est poursuivie jusqu'à ce que le dégagement de gaz ait cessé.

10. Procédé selon l'une quelconque des revendications précédentes, dans lequel ladite réaction de désactivation abaisse le pH de pas plus de 1 unité de pH, de préférence de pas plus de 0,5 unité de pH.

11. Procédé selon l'une quelconque des revendications précédentes, dans lequel ladite réaction de désactivation abaisse le pH à pas moins de pH 6, de préférence à pas moins de pH 6,5.

12. Procédé selon l'une quelconque des revendications précédentes, dans lequel une deuxième étape de séparation des phases est réalisée après ladite élimination du gaz dans l'étape d) pour augmenter la concentration de ladite huile de savon.

13. Procédé selon l'une quelconque des revendications précédentes, dans lequel ladite acidulation dans l'étape e) comprend le chauffage de l'huile de savon appauvrie en gaz à une température supérieure à 80°C, de préférence supérieure à 90°C et l'abaissement du pH avec ladite deuxième portion d'acide fort en une ou plusieurs étapes jusqu'à une valeur entre pH 2 et 4.

14. Procédé selon l'une quelconque des revendications précédentes, dans lequel ladite réaction de désactivation est réalisée sous vide pour faciliter l'élimination du gaz dégagé.

15. Utilisation d'une réaction de désactivation d'une saumure dans un procédé de production de tallol à partir d'huile de savon, qui comprend la réaction du reste de saumure de bicarbonate demeurant en mélange avec ladite huile de savon avec une première portion d'acide fort, l'élimination du gaz dégagé dans ladite réaction de désactivation, et l'acidulation de l'huile de savon appauvrie en gaz avec une deuxième portion d'acide fort.
